# EUROPEAN PATENT SPECIFICATION

(11) **EP 2 488 449 B1**
(45) Date of publication and mention of the grant of the patent: **30.09.2015**
(21) Application number: 10760734.3
(22) Date of filing: 07.10.2010
(51) Int. Cl.: C01B 11/02

(54) **PROCESS FOR PRODUCTION OF CHLORINE DIOXIDE**
Verfahren zur Herstellung von Chlordioxid
Procédé de production de dioxyde de chlore

(30) Priority: 12.10.2009 EP 09172745; 12.10.2009 US 250629 P
(43) Date of publication of application: 22.08.2012
(73) Proprietor: Akzo Nobel Chemicals International B.V., 3811 MH Amersfoort (NL)
(72) Inventor: DAHL, Anders, S-132 34 Saltsjö-Boo (SE); PELIN, Kalle Hans Thomas, S-442 53 Ytterby (SE)
(74) Representative: Akzo Nobel IP Department
(86) International application number: PCT/EP2010/064966
(87) International publication number: WO 2011/045222

(56) References cited:
- EP-A1- 0 131 378
- US-A- 4 978 517
- US-A1- 2004 228 790
- Fredette, Maurice C.: "Chapter II 2: Bleaching Chemicals: Chlorine Dioxide" In: Dence, Carlton W., Reeve, Douglas W.: "Pulp Bleaching", 1996, Tappi Press, Atlanta ISBN: 0-89852-963-0 pages 61-69, * page 64 - page 65; figure 3 *
- Chlorine Dioxide Generation, Brochure, published by Eka Chemicals AB, Cellchem.

## Description

### Field of the invention

The present invention relates to a process for production of storage stable chlorine dioxide having low amounts of by-products comprising reacting in an acidic reaction medium in a reaction vessel an alkali metal chlorate or chloric acid and methanol to generate chlorine dioxide.

### Background of the invention

There are numerous different processes for chlorine dioxide production. Most large scale processes in commercial use are run at pulp mills and involve continuous reaction of alkali metal chlorate in an acidic reaction medium with a reducing agent such as hydrogen peroxide, methanol, chloride ions or sulfur dioxide to form chlorine dioxide that is withdrawn as a gas from the reaction medium and then absorbed in water that is brought to a storage tank. An overview of such processes can be found in Ullmann's Encyclopedia of Industrial Chemistry, Chlorine Oxides and Chlorine Oxygen Acids, DOI: 10.1002/14,356007.a06_483.pub2, Article Online Posting Date: April 15, 2010, p. 17-25.

In many commercial processes methanol is used as reducing agent, as described in e.g. US patents 4081520, 4465658 4473540, 4770868, 4978517 and 5770171. However, methanol based processes all suffer from the presence of various impurities in the chlorine dioxide, such as by-products like formic acid as well as non-reacted methanol, which have been found to affect the stability of the chlorine dioxide.

In US 4978517 it is suggested that in a sub-atmospheric process losses in the form of by-products can be reduced by recirculating condensate comprising formic acid from the chlorine dioxide product stream to the reactor, which, however, has been found to increase the evaporative load and thus also the energy consumption.

US 2004/0228790 discloses a process for the production of chlorine dioxide in which a fraction of the chlorine dioxide gas from the generator is withdrawn after cooling and used for producing chlorite, while the remaining chlorine dioxide gas is brought together with condensate from the cooling to an absorber to form an aqueous solution of chlorine dioxide end product.

It would be advantageous to provide a methanol based process for producing chlorine dioxide containing reduced amounts of by-products such as formic acid and unreacted methanol, which process is useful for producing chlorine dioxide solutions having increased storage stability. Due to the inherent thermodynamic instability and high reactivity of chlorine dioxide, storage of a solution thereof is subject to the risk for losing some of the chlorine dioxide due to chemical reactions.

### Summary of the invention

It is an object of the present invention to provide an efficient process for the production of chlorine dioxide with methanol as reducing agent, in which the chlorine dioxide obtained has high storage stability and has low concentrations of by-products. These and other objects will be fulfilled with the provision of the present invention.

The invention concerns a process for production of chlorine dioxide comprising reacting in an aqueous reaction medium in a reaction vessel an alkali metal chlorate or chloric acid and methanol to generate chlorine dioxide, withdrawing from the reaction vessel a gas comprising chlorine dioxide and gaseous by-products, condensing part of the gas withdrawn to obtain a condensate, and removing the condensate from the non-condensed gas containing chlorine dioxide without re-circulating it back to the process for production of chlorine dioxide.

It has been found that by removing the condensate and preventing it from being incorporated with the main chlorine dioxide product, i.e. the chlorine dioxide in the non-condensed part of the gas, the loss of chlorine dioxide through chemical reactions can be minimized, thus improving the chemical yield for methanol based processes. It has further been found that the condensate removed may be used as a biocide, or be used in a bleaching application.

These and other aspect and advantages will be apparent in connection with the following description.

### Detailed description of the invention

The chlorine dioxide may, for example, be generated as described in the earlier mentioned US patents 4081520, 4465658, 4473540, 4770868 and 5770171.

The chlorine dioxide is preferably generated by reducing chlorate ions by means of a methanol. The chlorate ions may originate from alkali metal chlorate, chloric acid or a mixture thereof. Any alkali metal chlorate may be used, such as chlorate of sodium, potassium or mixtures thereof. Normally sodium chlorate is preferred. Usually alkali metal chlorate is present in the reaction medium and the concentration thereof may vary within wide limits, for example from about 0.15 moles/dm³ up to saturation, preferably from about 1.5 moles/dm³ up to saturation, or from about 2.5 moles/dm³ up to saturation.

The aqueous reaction medium in the reaction vessel is preferably acidic, for example having an acidity from about 2 to about 11 N preferably from about 1 to about 10 N, or from about 1.5 to about 7 N. The acidity may be provided by feeding any suitable acid, preferably a mineral acid. Examples of acids include sulfuric acid, hydrochloric acid, phosphoric acid and chloric acid, of which sulfuric acid is particularly preferred. Preferably the reaction medium is maintained at a temperature from about 15 to about 100 °C, most preferably from about 30 to about 85 °C.

The process may be run at sub-atmospheric pressure, substantially atmospheric pressure or super-atmospheric pressure.

In an embodiment the reaction medium is preferably maintained under non-boiling conditions and preferably at a pressure from about -5 kPa to about 200 kPa relative to the atmospheric pressure. Inert gas such as air is then preferably blown through the reaction medium to dilute to the chlorine dioxide.

In a further embodiment the reaction medium is preferably maintained at a temperature and pressure corresponding to its boiling point and preferably at sub-atmospheric pressure. The pressure and the temperature are then set to evaporate water to dilute the chlorine dioxide formed and withdrawn from the reaction medium. Further, the absolute pressure is preferably maintained from about 8 to about 80 kPa, most preferably from about 8 to about 55 kPa, or from about 10 to about 50 kPa.

In a process run at sub-atmospheric pressure, evaporation of water from the reaction medium usually consumes more energy than generated in the process, which is balanced by supplying heat to the reaction medium circulating through a heater in a circulation conduit. Any kind of heater may be used, such as heat exchangers heated by steam or any other hot fluid medium.

If sulfuric acid is used, it is preferably fed at a concentration from about 30 to about 98 wt%, most preferably from about 60 to about 85 wt%. Sulfuric acid of low concentration is easier to mix with the reaction medium, but a high concentration gives the advantage of utilization of the heat of dilution and not needing to evaporate the excess water. The amount fed is preferably balanced to the amount of chlorate fed in order to arrive at a steady state concentration in the generator suitable for the reducing agent chosen.

Methanol is preferably fed in an amount from about 0.2 to about 1 moles per mole alkali metal chlorate fed, most preferably from about 0.2 to about 0.8 mole per mole alkali metal chlorate fed, particularly most preferably from about 0.2 to about 0.4 moles per mole alkali metal chlorate fed.

It is preferred to operate the process under conditions to obtain precipitation of solid alkali metal sulfate in the reaction medium at sub atmospheric pressure. Depending on the acidity of the reaction medium, substantially neutral sulfate or acidic sesquisulfate may form. If desired, acidic solid alkali metal sulfate may be partly or fully neutralised as described in, for example, US 5674466 or US 6585950. However, it is also possible to operate the process under such conditions that no formation of solid alkali metal sulfate occurs.

At least some of the alkali metal sulfate formed is normally withdrawn, preferably as a solid salt cake that may be removed, for example by means of a conventional filter, and may in some cases be used as a by-product. However, it is also possible to electrochemically acidify some of the alkali metal sulfate and recycle it to the reaction medium to replace some of the sulfuric acid feed. Such electrochemical acidification is described in e.g. US patents 4129484, 5478446, 5487881, 5858322 and 6322690.

The gaseous by-products in the gas withdrawn from the reaction vessel usually comprise formic acid. The gas withdrawn usually further comprises evaporated water, unreacted methanol and optionally other by-products such as carbon dioxide. The concentration of chlorine dioxide in the withdrawn gas is preferably maintained at a partial pressure from about 1 to about 30 kPa or from about 2 to about 5 kPa. The total pressure is also made up from the amount of water vapor and soluble and insoluble gases.

The gas withdrawn from the reaction vessel is brought to a condenser to form a condensate usually comprising formic acid, methanol and water and in most cases also some of the chlorine dioxide. The condensate is removed from the non-condensed gas, in which the major part of the chlorine dioxide is present, without directly or indirectly recirculating the condensate or a concentrate thereof back to the process for producing chlorine dioxide. Thus, the condensate is not directly or indirectly recirculated back to the reaction vessel as would have been the case if it was brought to a dissolver for alkali metal chlorate, a storage tank for methanol or any other feed chemical, or to a circulation conduit for heating the reaction medium. It has been found that by removing condensate without recirculation and preventing it from being incorporated with the final chlorine dioxide product, chlorine dioxide with less amounts of by-products, and thereby higher stability, can be obtained without increasing the evaporative load in the reaction vessel.

The condensation is preferably carried out at a temperature from about 2 to about 50 °C, or from about 15 to about 35 °C. A decrease in temperature will lead to more condensate being formed, and thus to a more efficient removal of by-products. The condensation may, for example, be performed at an absolute pressure of from about 12 to about 53 kPa.

There are several options for using the removed condensate, either as it is or after removing chlorine dioxide therefrom. Thus, a part or all of it may be used in a bleaching process or as a biocide, in which cases the formic acid has a beneficial effect. In a pulp bleaching process, the condensate may, for example, be used in a chlorine dioxide stage or in a peroxide stage, the latter optionally after removing chlorine dioxide from the condensate. In cases direct use of some or all of the condensate is not appropriate, the chlorine dioxide may be destroyed or removed and recovered. The remaining part may be used as a source for formic acid or be brought to a conventional waste water treatment plant.

If desired, chlorine dioxide may be removed from the condensate, for example by stripping with an inert gas, such as air, and may then be mixed with the main chlorine dioxide product. The removal may be facilitated by increasing the pH of the condensate, for example to from about 6.5 to about 7.8. Adjustment of the pH can be made by any alkali source such as alkali metal hydroxide. The resulting formic acid or formiate solution may then be used as a chemical feed, for example in a bio treatment system as a carbon source. The condensate may also be concentrated by membrane separation or azeotropic distillation.

After removal of the condensate, the non-condensed gas preferably has a content of formic acid of less than about 8 wt %, or less than about 4 wt %, based on the amount of chlorine dioxide. As a safety measure, the condensate may be cooled and/or diluted.

The non-condensed gas containing chlorine dioxide may, after removal of the condensate, be brought to an absorption tower where it may be contacted with a flow of water to form an aqueous solution containing chlorine dioxide, which in most cases is the final chlorine dioxide product. By the term "absorption tower" as used herein is meant any column or tower or the like where gas is contacted with a liquid flow to absorb water soluble compounds therein. Gas and liquid preferably flow counter-currently. Inside the absorption tower devices such as plates or packing elements are preferably placed to provide interfacial surfaces where the mass transfer between the gas and the liquid can take place. Any conventional packing elements and plates can be used such as Raschig rings, Berl saddles, Intalox saddles, sieve plates and bubble cap plates. By removing condensate in accordance with the invention it is prevented that it is incorporated with the aqueous solution containing chlorine dioxide.

The chlorine dioxide concentration in the aqueous solution obtained from the absorption tower is preferably from about 2 to about 18 g/dm³ or from about 8 to about 12 g/dm³. The temperature thereof is preferably from about 0 to about 35°C or from about 5 to about 25°C.The pH thereof can vary within a wide range, for example from about 1 to about 3, or from about 1.6 to about 2.6.

The aqueous solution containing chlorine dioxide may be brought to a storage tank, wherein the storage stability will be increased, as less formic acid is present to react with the chlorine dioxide.

It has been found that removing condensate before the absorption reduces the demand for cooling the water used in the absorption tower.

An embodiment of the invention will now be described in connection with the appended figure showing a schematic flow diagram thereof. The invention is, however, not limited to the embodiment shown.

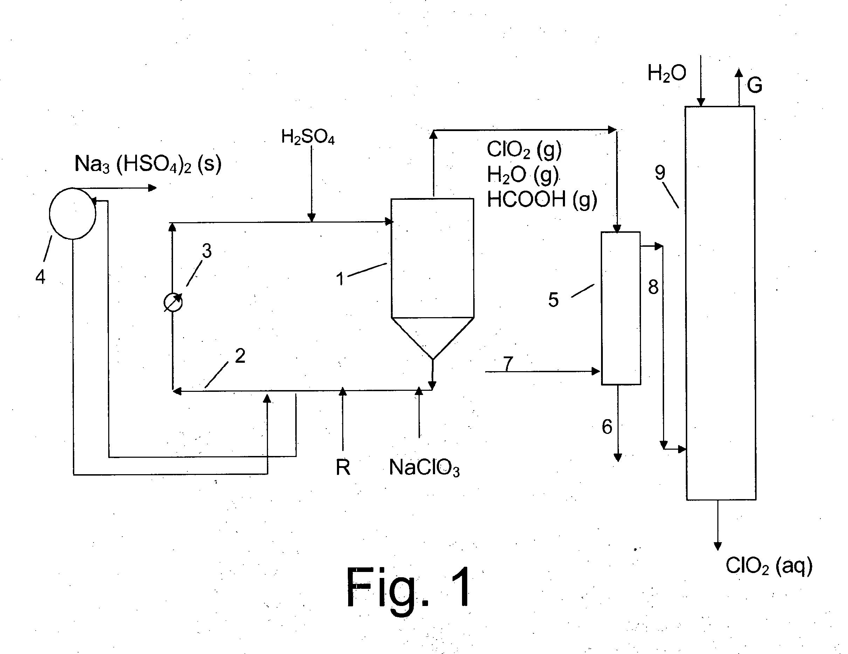

An embodiment of the invention is further illustrated in the appended Fig. 1.

Referring to Fig. 1, a process for the production of chlorine dioxide under crystallising conditions is schematically shown. A reaction vessel 1 holds a reaction medium under sub-atmospheric pressure, usually from about 8 to about 80 kPa absolute. The reaction medium is circulated through a circulation conduit 2 and a heater 3 (commonly called "reboiler") and back to the reaction vessel 1 at a rate sufficient for keeping the temperature of the reaction medium at the boiling point, usually from about 15 to about 100°C. Feed streams of sodium chlorate, sulfuric acid and methanol as reducing agent R are fed to various points of the circulation conduits, but may, if appropriate, also be fed directly to the reaction vessel. The concentration of chlorate maintained in the reaction medium may vary within wide limits, for example from about 0.25 moles/litre up to saturation. The acidity of the reaction medium is preferably maintained from about 0.5 to about 12 N. In the reaction medium sodium chlorate, methanol and sulfuric acid react to form chlorine dioxide, sodium sulfate, formic acid, carbon dioxide and optionally other by-products. Chlorine dioxide, formic acid, unreacted methanol and other gaseous products are withdrawn as a gas together with evaporated water. Sodium sulfate precipitates as a usually acidic salt and is withdrawn as a salt cake, usually Na₃H(SO₄)₂ (s), by circulating reaction medium through a filter 4. The gas withdrawn from the reaction vessel 1 is brought to a condenser 5 in which the conditions are controlled so water is condensed and significant parts of the formic acid and the methanol are dissolved therein, usually together with a small part of the chlorine dioxide, such about 0.8% of the total amount of chlorine dioxide or less. The amount of chlorine dioxide in the condensate may be further reduced by blowing air at 7 and thereby desorbing chlorine dioxide. The condensate is then removed as a flow 6 and, for example, brought to a bleach plant. The non-condensed gas 8 containing the major part of the chlorine dioxide is brought to an absorption tower 9 for the absorption of the chlorine dioxide in chilled water to form chlorine dioxide water ClO₂ (aq) while non-dissolved gaseous components are withdrawn as gas G. The condenser may, for example, be maintained at a temperature from about 2 to about 40°C or from about 12 to about 25°C, and an absolute pressure from about 12 to about 53 kPa or from about 15 to about 30 kPa.

The invention being thus described, it will be obvious that the same may be varied in many ways. Such variations are not to be regarded as a departure from the gist and scope of the present invention, and all such modifications as would be obvious to one skilled in the art are intended to be included within the scope of the claims. While the examples here below provide more specific details of the reactions, the following general principles may here be disclosed. The following examples will further illustrate the described invention without limiting the scope of it.

### Example

Tests were made in a plant set up as in Fig. 1 operating at stable conditions at a set point of 25 tonnes ClO₂ per day. The temperature was 10°C on incoming mechanical water to the absorber and 12°C on out-going product. The generator concentrations at the beginning of the tests were 344 g/dm³ NaClO₃, 313 g/dm³ H₂SO₄, 10 wt% crystals and 48% generator level. At the end of the tests the generator concentrations were 296 g/dm³ NaClO₃, 315 g/dm³ H₂SO₄, 10 wt% crystals and 48% generator level.

Three different stability tests were performed on chlorine dioxide water sampled after the absorber.

Test 1 was performed on chlorine dioxide water obtained when operated in a conventional mode and with the temperature in the condenser set to 38°C. Thus, the condensate was not removed but brought to the absorber and thus incorporated with the chlorine dioxide water.

Test 2 was performed on chlorine dioxide obtained when operated as in Test 1 with the exception that the condensate was removed and not brought to the absorber.

Test 3 was performed on chlorine dioxide obtained when operated as in Test 2 with the exception that condenser temperature was 25°C.

For each test, a large sample, approximately 5 dm³, was taken out into a "foldable" 10 dm³ tank with a valve. From the large sample, about 40 small brown glass bottles, of 30 ml were filled to 100% as quickly as possible. The small sample bottles had been kept cold before the test in order to avoid degassing during filling. The filled sample bottles were stored for eight hours in a refrigerator to maintain a relatively constant temperature (8-11 °C) and the samples were analysed several times. The chlorine dioxide concentration at an average of 5 to 8 bottles for each sample point, at 0 and 8 hours, are shown in Table 1.

**Table 1**

| | **ClO₂ conc**. **0 h (g/l)** | **ClO₂ conc**. **8 hrs** (**g**/**l**) | **Relative loss of ClO₂** |
|---|---|---|---|
| **Test 1** (comparative) | 8.44 | 8.18 | 3.09% |
| **Test 2** (invention) | 9.73 | 9.51 | 2.26% |
| **Test 3** (invention) | 8.83 | 8.79 | 0.45% |

It appears that the stability of the chlorine dioxide is improved by removing the condensate and is further improved by decreasing the temperature in the condenser.

## Claims

1. A process for production of chlorine dioxide comprising;
- reacting in an aqueous reaction medium in a reaction vessel an alkali metal chlorate or chloric acid and methanol to generate chlorine dioxide,
- withdrawing from the reaction vessel a gas comprising chlorine dioxide and gaseous by-products,
- condensing part of the gas withdrawn to obtain a condensate; and
- removing said condensate from the non-condensed gas containing chlorine dioxide without re-circulating it back to the process for production of chlorine dioxide.

2. A process according to claim 1, wherein said reaction medium is maintained at a temperature from about 15°C to about 100°C.

3. A process according to any one of the claims 1 or 2, wherein said reaction medium is maintained at an acidity from about 2 to about 11 N.

4. A process according to any one of the preceding claims, wherein the reaction medium is maintained at a temperature and pressure corresponding to its boiling point.

5. A process according to any one of the preceding claims, wherein the reaction medium is maintained at a pressure from about 8 to about 80 kPa.

6. A process according to any one of the preceding claims, further comprising precipitating solid alkali metal sulfate in the reaction medium.

7. A process according to any one of the preceding claims, wherein said gaseous by-products withdrawn from the reaction vessel comprise formic acid.

8. A process according to any one of the preceding claims, wherein part of the gas withdrawn from the reaction vessel is condensed at a temperature from about 2 to about 50°C.

9. A process according to claim 8, wherein part of the gas withdrawn from the reaction vessel is condensed at a temperature from about 15 to about 35°C.

10. A process according to any one of the preceding claims, wherein a part of or all the removed condensate is used in a bleaching process.

11. A process according to any one of the preceding claims, wherein a part of or all the removed condensate is used as a biocide.

12. A process according to any one of the preceding claims, further comprising bringing said non-condensed gas, after removal of the condensate, to an absorption tower, where it is contacted with a flow of water to form an aqueous solution containing chlorine dioxide.

13. A process according to claim 12, further comprising bringing said aqueous solution containing chlorine dioxide to a storage tank.

14. A process according to any one of the preceding claims, further comprising concentrating the condensate by membrane separation or azeotropic distillation.

15. A process according to any one of the preceding claims, further comprising removing the chlorine dioxide from the condensate and using a resulting formic acid or formiate solution as a chemical feed in a bio treatment system.

## Patentansprüche

1. Verfahren für die Herstellung von Chlordioxid aufweisend:
- Reagieren lassen eines Alkalimetallchlorats oder von Chlorsäure und Methanol in einem Reaktionsgefäß in einem wässrigen Medium, um Chlordioxid zu erzeugen,
- Abziehen eines Chlordioxid und gasförmigen Nebenprodukten umfassendes Gases aus dem Reaktionsgefäß,
- Kondensieren eines Teils des abgezogenen Gases, um ein Kondensat zu erhalten; und
- Entfernen des Kondensats aus dem Chlordioxid enthaltenden, nicht kondensierten Gas, ohne es zur Herstellung von Chlordioxid in den Prozess zurückzuführen.

2. Verfahren nach Anspruch 1, wobei das Reaktionsmedium bei einer Temperatur von etwa 15°C bis etwa 100°C aufrechterhalten wird.

3. Verfahren nach einem der Ansprüche 1 oder 2, wobei das Reaktionsmedium bei einem Säuregehalt von etwa 2 bis etwa 11 N aufrechterhalten wird.

4. Verfahren nach einem der vorhergehenden Ansprüche, wobei das Reaktionsmedium bei einer Temperatur und einem Druck entsprechend seinem Siedepunkt aufrechterhalten wird.

5. Verfahren nach einem der vorhergehenden Ansprüche, wobei das Reaktionsmedium bei einem Druck von etwa 8 bis etwa 80 kPa aufrechterhalten wird.

6. Verfahren nach einem der vorhergehenden Ansprüche, weiterhin aufweisend das Ausfällen von festem Alkalimetallsulfat in dem Reaktionsmedium.

7. Verfahren nach einem der vorhergehenden Ansprüche, wobei die aus dem Reaktionsgefäß abgezogenen gasförmigen Nebenprodukte Ameisensäure umfassen.

8. Verfahren nach einem der vorhergehenden Ansprüche, wobei ein Teil des aus dem Reaktionsgefäß abgezogenen Gases bei einer Temperatur von etwa 2 bis etwa 50°C kondensiert wird.

9. Verfahren nach Anspruch 8, wobei ein Teil des aus dem Reaktionsgefäß abgezogenen Gases bei einer Temperatur von etwa 15 bis etwa 35°C kondensiert wird.

10. Verfahren nach einem der vorhergehenden Ansprüche, wobei ein Teil oder das gesamte entfernte Kondensat in einem Bleichverfahren verwendet wird.

11. Verfahren nach einem der vorhergehenden Ansprüche, wobei ein Teil oder das gesamte entfernte Kondensat als Biozid verwendet wird.

12. Verfahren nach einem der vorhergehenden Ansprüche, weiterhin aufweisend das Überführen des nicht kondensierten Gases nach dem Entfernen des Kondensats zu einem Absorptionsturm, wo es mit einer Wasserströmung in Kontakt gebracht wird, um eine Chlordioxid enthaltende wässrige Lösung zu bilden.

13. Verfahren nach Anspruch 12, weiterhin aufweisend das Überführen der Chlordioxid enthaltenden wässrigen Lösung zu einem Lagertank.

14. Verfahren nach einem der vorhergehenden Ansprüche, weiterhin aufweisend das Konzentrieren des Kondensats durch Membranseparation oder azeotrope Destillation.

15. Verfahren nach einem der vorhergehenden Ansprüche, weiterhin aufweisend das Entfernen des Chlordioxids aus dem Kondensat und das Verwenden einer resultierenden Ameisensäure oder Formiatlösung als chemische Zufuhr in einem Bio-Behandlungssystem.

## Revendications

1. Procédé de production de dioxyde de chlore comprenant le fait :
- de faire réagir dans un milieu réactionnel aqueux dans un récipient de réaction un chlorate de métal alcalin ou de l'acide chlorique et du méthanol pour générer du dioxyde de chlore,
- de retirer du récipient de réaction un gaz comprenant du dioxyde de chlore et des sous-produits gazeux,
- de condenser une partie du gaz retiré pour obtenir un condensat ; et
- d'éliminer ledit condensat du gaz non condensé contenant du dioxyde de chlore sans le faire recirculer en retour vers le procédé de production de dioxyde de chlore.

2. Procédé selon la revendication 1, dans lequel ledit milieu réactionnel est maintenu à une température allant d'environ 15°C à environ 100°C.

3. Procédé selon l'une quelconque des revendications 1 ou 2, dans lequel ledit milieu réactionnel est maintenu à une acidité allant d'environ 2 à environ 11 N.

4. Procédé selon l'une quelconque des revendications précédentes, dans lequel le milieu réactionnel est maintenu à une température et à une pression correspondant à son point d'ébullition.

5. Procédé selon l'une quelconque des revendications précédentes, dans lequel le milieu réactionnel est maintenu à une pression allant d'environ 8 à environ 80 kPa.

6. Procédé selon l'une quelconque des revendications précédentes, comprenant en outre le fait de précipiter du sulfate de métal alcalin solide dans le milieu réactionnel.

7. Procédé selon l'une quelconque des revendications précédentes, dans lequel lesdits sous-produits gazeux retirés du récipient de réaction comprennent de l'acide formique.

8. Procédé selon l'une quelconque des revendications précédentes, dans lequel une partie du gaz retiré du récipient de réaction est condensée à une température allant d'environ 2 à environ 50°C.

9. Procédé selon la revendication 8, dans lequel une partie du gaz retiré du récipient de réaction est condensée à une température allant d'environ 15 à environ 35°C.

10. Procédé selon l'une quelconque des revendications précédentes, dans lequel une partie ou la totalité du condensat éliminé est utilisée dans un procédé de blanchiment.

11. Procédé selon l'une quelconque des revendications précédentes, dans lequel une partie ou la totalité du condensat éliminé est utilisée en tant que biocide.

12. Procédé selon l'une quelconque des revendications précédentes, comprenant en outre le fait d'amener ledit gaz non condensé, après élimination du condensat, à une tour d'absorption, où il est mis en contact avec un flux d'eau pour former une solution aqueuse contenant du dioxyde de chlore.

13. Procédé selon la revendication 12, comprenant en outre le fait d'amener ladite solution aqueuse contenant du dioxyde de chlore à un réservoir de stockage.

14. Procédé selon l'une quelconque des revendications précédentes, comprenant en outre le fait de concentrer le condensat par séparation sur membrane ou par distillation azéotropique.

15. Procédé selon l'une quelconque des revendications précédentes, comprenant en outre le fait d'éliminer le dioxyde de chlore du condensat et d'utiliser un acide formique ou une solution de formiate résultant(e) en tant qu'alimentation en produits chimiques dans un système de traitement biologique.
